# EUROPEAN PATENT SPECIFICATION

(11) **EP 3 395 199 B1**
(45) Date of publication and mention of the grant of the patent: **01.03.2023**
(21) Application number: 18169191.6
(22) Date of filing: 25.04.2018
(51) Int. Cl.: A46B 5/00, A46B 9/04, A46B 15/00, A61C 17/22

(54) **ORAL CARE APPLIANCE AND ITS CARE HEAD**
MUNDPFLEGEGERÄT UND DESSEN PFLEGEKOPF
APPAREIL DE SOINS BUCCAUX ET SA TÊTE DE SOINS

(30) Priority: 25.04.2017 CN 201720438026 U
(43) Date of publication of application: 31.10.2018
(73) Proprietor: Techtronic Cordless GP, Anderson, SC 29621 (US)
(72) Inventor: Ha, World Sai Kai, Dongguan City, Guangdong (CN)
(74) Representative: Novagraaf Group

(56) References cited:
- US-A1- 2013 180 063
- US-B2- 8 590 092

## Description

### Technical Field

The invention relates to an oral care appliance, and more particularly, to a cleaning head for an oral care appliance.

### Background

Toothbrushes are well-known oral care appliances. A toothbrush typically includes a handle and a brush head attached to the handle. The brush head typically includes one or more bristle tufts for cleaning teeth and gums. By rapidly moving the brush head (manually or electrically), the bristle tufts may be caused to rotate and/or oscillate to clean the plaque and calculus formed on the teeth and gums.

In use, the user moves the toothbrush from one tooth to another, allowing the rotating or oscillating toothbrush (manual or electric) to do most of the cleaning work. As the alignment direction, configuration, and state of the teeth, as well as the force applied on the teeth by the user and the way by which the user brushes the teeth can all be different for different users, it is desirable to improve the operability and safety of the toothbrush.

According to its abstract, US-A-2013/180063 describes a replaceable head part for an electric powered toothbrush comprising an elongate sleeve including a flexible portion, and containing a longitudinal drive shaft rotatable in oscillatory rotary motion. The drive shaft has a spherical bearing part received in a cavity in the sleeve. The head part incorporates a transmission system to convert the rotation of the head drive shaft into rotation of the bristle carrier comprising an eccentric pin extending from the head drive shaft to move the bristle carrier in oscillatory rotary motion, and having a spherical pin bearing part received in a receiving cavity in the bristle carrier.

According to its abstract, US-B-8590092 describes a vibrating toothbrush comprising a handle including a body with a tubular member extending outwardly from one end. A replaceable sleeve slides over the tubular member and detachably engages the body. One or more of the sleeve, tubular member and body incorporates a vibration damping zone for reducing vibration transmission from the sleeve to the handle. The damping zone is one of a material that differs in damping properties to the material of the rest of the toothbrush; a hole defined in the one of the sleeve, tubular member and body, and a toothbrush where that hole is filled with an elastomeric material.

### Summary of the Invention

The invention is described in claim 1; preferred embodiments are seen in the dependent claims.

Embodiments of the invention provide a different or improved care head for an oral care appliance, such as but not limited to a brush head for a toothbrush.

According to a first aspect of the invention, there is provided a care head for an oral care appliance. The care head includes a care head body and a care element. The care head body has a first portion adapted to connect with a handle of an oral care appliance, a second portion adapted to carry a care element an the front side of the care head body, and a flexible portion (joint portion) disposed between the first portion and the second portion. The care element is arranged at the second portion. The flexible portion is integrally formed with the first portion and the second portion. The flexible portion is formed by a compressible wall portion that defines a hollow space, has a through-hole and can be compressed along the longitudinal direction of the care head body so that in use the second portion is reversibly bendable relative to the first portion. The flexible portion is integrally molded with the first portion and the second portion.

Optionally, in the default non-bent configuration, the length of the first portion (in the longitudinal direction of the care head body) is greater than the length of the second portion (in the longitudinal direction of the care head body). Optionally, in the default non-bent configuration, the length of the second portion (in the longitudinal direction of the care head body) is greater than the length of the flexible portion (in the longitudinal direction of the care head body). In one example, in the default non-bent configuration, the length of the first portion is about 48 millimeters, the length of the second portion is about 14 to 16 millimeters, and the length of the flexible portion is about 9 millimeters.

In a specific embodiment, the second portion is tiltable up to 10 degrees relative to the longitudinal axis of the care head body that is not bent. Preferably, the second portion is tiltable up to about 5 degrees relative to the longitudinal axis of the care head body that is not bent. More preferably, the second portion is tiltable up to about 4.5 degrees relative to the longitudinal axis of the care head body that is not bent.

In a specific embodiment, the direction of the reversible bending includes at least the front-rear direction of the care head. Preferably, the direction of the reversible bending is along any direction (360 degrees) of the care head.

The care head body is made of a single polymeric material. Preferably, the polymeric material is polypropylene.

The compressible wall portion includes a first rib and a second rib. The first rib is located on the back side of the care head and directly connected between the first portion and the second portion. The second rib is located on the front side of the care head and is directly connected between the first portion and the second portion.

The first rib is substantially straight along the longitudinal axis of the care head body.

In a specific embodiment, the second rib includes a curved or angled portion that does not extend directly parallel to the longitudinal direction of the care head body (i.e., angled with respect to the longitudinal direction of the care head body), and is adapted to be deformed during the reversible bending. The second rib includes a first substantially straight portion, a second substantially straight portion and a ring portion. The first substantially straight portion extends in a longitudinal direction of the care head body and is connected with the first portion. The second substantially straight portion extends in the longitudinal direction of the care head body and is connected with the second portion. The ring portion is connected between the first substantially straight portion and the second substantially straight portion. The ring portion can be in open or closed loop form. The ring portion can be oval, circular or polygonal.

Optionally, the compressible wall portion also includes at least one of the following: a third rib and a fourth rib. The third rib is located at a first side of the care head and the first side is located between the front side and the back side. The fourth rib is located at a second side of the care head, the second side being opposite the first side and located between the front side and the back side. Preferably, the third rib and the fourth rib have the same form.

In a specific embodiment, at least one of the second rib, the third rib, and the fourth rib includes a curved or angled portion (i.e., angled with respect to the longitudinal direction of the care head body), which does not extend directly parallel to the longitudinal direction of the care head body and is adapted to be deformed during the reversible bending.

Preferably, the first portion, the second portion and the flexible portion together define a chamber extending in the longitudinal direction of the care head body. Optionally, the second portion includes a lateral opening on the front side for mounting the care element, the lateral opening being communicated with the chamber.

In a preferred embodiment, the care element includes a bristle tuft carrying member. The bristle tuft carrying member includes a disk having a plurality of holes, and a plurality of bristle tufts mounted in a plurality of the holes and extending at least partially perpendicular to the disk.

In a specific embodiment, the care head further includes a shaft disposed in the chamber. The shaft is arranged to connect to the care element at one end and to the connector member at the other end. The connector member is adapted to be operably connected with a drive member in a handle of the oral care appliance such that in use the care element can be actuated by the drive member. Optionally, the connecting member is at least partially located in the chamber.

Preferably, the shaft can be reversibly bent so that in use the bending of the care head body can cause bending of the shaft.

In a preferred embodiment, the care head further includes a polymeric sleeve surrounding the flexible portion. Preferably, the polymeric sleeve is arranged to extend into the through-hole of the compressible wall portion. Preferably, the polymeric sleeve is overmolded on the flexible portion. In one embodiment, the polymeric sleeve is made of a thermoplastic elastomer.

In a specific embodiment, the oral care appliance is an electric toothbrush and the care element includes bristle tufts. In one example, the electric toothbrush is an oscillatory toothbrush with an oscillatory drive mechanism that, in use, drives the care element to oscillate (rotate to-and-fro) about an oscillation axis.

According to a second aspect of the invention, there is provided an oral care appliance, comprising a handle and a care head according to the first aspect of the invention connected to the handle. The oral care appliance is preferably a toothbrush, in particular an electric toothbrush.

According to a third aspect of the invention, there is provided an oral care appliance comprising: a handle of an oral care appliance; and one or more care heads according to the first aspect of the invention, which are adapted to be removably connected with the handle. The oral care appliance is preferably a toothbrush, in particular an electric toothbrush.

The care head for an oral care appliance of the invention has many advantages. For example, the care head for an oral care appliance of the invention has a simple structure, effectively providing improved operational flexibility of the care head without greatly increasing manufacturing cost and complexity. By integrally forming the flexible portion of the care head body with the first portion and the second portion, and forming the deformable compressible wall portion at the flexible portion, in combination with the flexibility or reversible bendability of the relatively stiff material itself, the care head can provide the user with a better oral care operation experience. In the example where the oral care appliance is a toothbrush, the flexibility or reversible bendability can prevent the user from discomfort or injury excessive force exerted on the toothbrush to press the toothbrush against the teeth or gum.

Other features and aspects of the invention will become apparent by considering the following detailed description and drawings.

### Description of the drawings

Embodiments of the invention will now be described by way of examples with reference to the accompanying drawings, in which:
Figure 1 is a perspective view of an oral care appliance according to one embodiment of the invention;
Figure 2A is a perspective view of the care head of the oral care appliance of Figure 1;
Figure 2B is an exploded view showing the care head of Figure 2A;
Figure 2C is a cross-sectional view taken along dotted line A-A of Figure 2A;
Figure 3A is a front view of the care head body of the care head of Figure 2A;
Figure 3B is a left side view of the care head body of the care head of Figure 2A;
Figure 3C is a right side view of the care head body of the care head of Figure 2A;
Figure 3D is a rear view of the care head body of the care head of Figure 2A;
Figure 3E is a partial view of the care head body of the care head of Figure 2A, showing the polymeric sleeve surrounding the flexible portion;
Figure 4A is a schematic view showing the care head of Figure 2A bent along the front-rear direction; and
Figure 4B is a schematic view showing the care head of Figure 2A bent along the left-right direction.

Before explaining any structure of the invention in detail, it is to be understood that the invention is not limited in its application to the structure of components and details of arrangement described in the following description or shown in the following drawings.

### Detailed Description of Embodiments

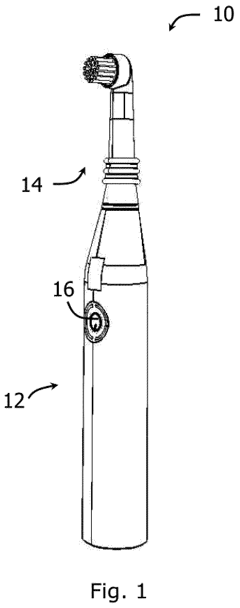

Figure 1 shows an oral care appliance according to one embodiment of the invention. In the present embodiment, the oral care appliance is in the form of an electric toothbrush. The electric toothbrush 10 mainly includes a handle 12 and a brush head 14. Although not shown, in one example, a drive member for driving a cleaning element in the brush head 14, a control circuit for controlling operation of the drive member, and a power source are arranged in the handle 12. The drive member may include a motor and a transmission mechanism connected with the motor. The power source can be a rechargeable battery. The handle is provided with a button 16. The button 16 is connected to the control circuit in the handle 12 to allow the user to control on/off or mode of operation of the toothbrush 10. Optionally, an indicator light may be arranged on the handle 12 to indicate the amount of power, operation status, or charging status of the toothbrush 10. Although not shown, the upper part of the handle 12 is provided with a connection part adapted to be drivingly connected with the brush head 14. The connection part may include a male or female coupling portion that can be connected with a respective female or male coupling portion of the brush head 14 for transmitting the drive of the drive member to the cleaning element of the brush head through the drive mechanism connected with the drive member so as to drive operation of the cleaning element. It should be understood that the electric toothbrush 10 may have different structures and may have additional or less functional or structural features.

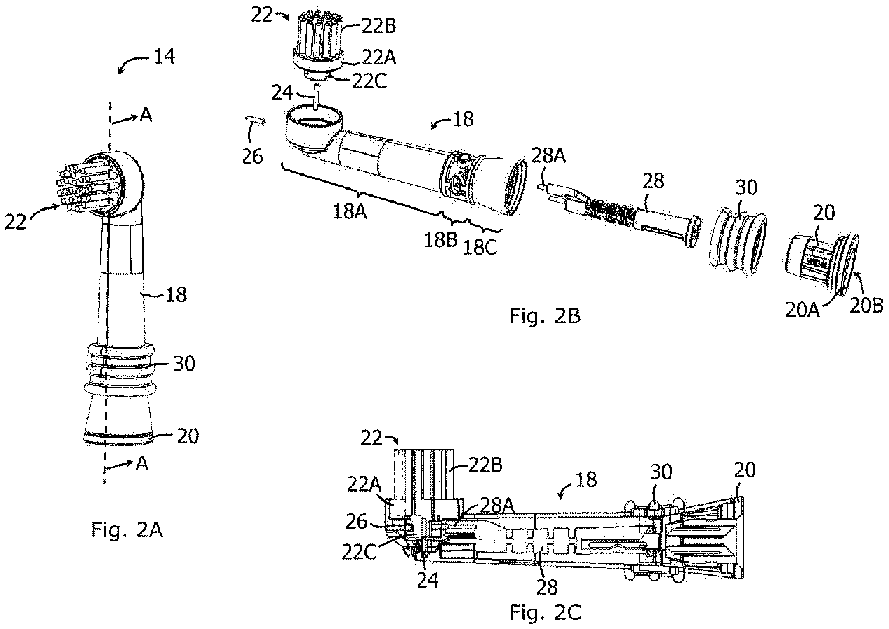

Figures 2A to 2C illustrate the brush head 14 of the electric toothbrush 10 of Figure 1. As shown in Figures 2A to 2C, the brush head 14 includes a body 18. The body 18 has a first portion 18C adapted to be connected with the handle 12 through a connector member 20, a flexible portion (joint portion) 18B, and a second portion 18A adapted to carry the cleaning element 22 on the front side. In one example, the length of the first portion 18C is greater than the length of the second portion 18A, and the length of the second portion 18A is greater than the length of the flexible portion 18B. In other examples, the length of the first portion 18C may be equal to or less than the length of the second portion 18A. The flexible portion 18B is located between the first portion 18C and the second portion 18A and is integrally formed with the first portion 18C and the second portion 18A. The flexible portion 18B is formed by a compressible wall portion. The compressible wall portion defines a hollow space that extends along the longitudinal direction of the brush head 14. The compressible wall portion also includes a through-hole and is compressible along the longitudinal direction of the body 18. Specifically, when subjected to a force, the compressible wall portion may be rotated or pivoted with respect to the longitudinal direction of the body 18 (longitudinal direction in a default, non-bent configuration) so as to compress the compressible wall portion in the longitudinal direction of the body 18. A reliable spring-back can be achieved by the structure of the compressible wall portion and the stiffness of the material of the compressible wall portion. With such design, in use, the second portion 18A can reversibly bend with respect to the first portion 18C. Preferably, the flexible portion 18B is integrally molded with the first portion 18C and the second portion 18A. In the present embodiment, the brush head 14 is made of a single polymeric material. Preferably, the polymeric material is plastic, such as polypropylene. Referring to Figures 2A and 2B, the first portion 18C, the second portion 18A, and the flexible portion 18B together define a chamber extending along the longitudinal direction of the body 18. The hollow space defined by the compressible wall portion of the flexible portion 18B may be part of the chamber. A lateral opening for mounting the cleaning element 22 is arranged on the front side of the second portion 18A. Preferably, the chamber communicates with the lateral opening.

The brush head 14 also includes a cleaning element 22 mounted in the lateral opening of the second portion 18A by latching pins 24, 26. In the present embodiment, the cleaning element 22 is a bristle tuft carrying member. This member includes a disk 22A on which holes are arranged, and bristle tuft(s) 22B are respectively mounted in the corresponding holes. Preferably, bristle tufts 22B extend at least partially perpendicular to disk 22A. The lower portion of the disk 22A has a stepped portion 22C. The stepped portion 22C includes a hole substantially perpendicular to the longitudinal direction of brush head 14 for receiving latching pin 24, a hole substantially parallel to the longitudinal direction of the brush head 14 for receiving latching pin 26, and an opening substantially parallel to the longitudinal direction of the brush head 14 for connecting with a shaft 28 arranged in the chamber. In one example, the stepped portion 22C may be driven by the shaft 28 to drive the cleaning element 22 to swing and oscillate (rotate to-and-fro) about the axis defined by the latching pin 24.

As described above, the brush head 14 also includes a shaft 28 disposed in the chamber. As shown in Figure 2C, a pin 28A at one end of the shaft 28 is connected to the opening in the stepped portion 22C of the cleaning element 22, and the other end of the shaft 28 is connected to the connector member 20. Preferably, the shaft 28 is also reversibly-bendable such that in use the shaft 28 may bend as the body 18 of brush head 14 bends. This does not only reduce the bending stress acting on the shaft 28, but can also utilize the stiffness and reversibly-bendable property of the shaft 28 to restore of the body 18 from the bent position. The connector member 20 is adapted to be connected with a connection part of the handle 12 and hence operably connected with the drive member in the handle 12, so that in use the cleaning element 22 can be driven by the drive member. As shown in Figure 2C, the connector member 20 is at least partially located in the chamber. In the present embodiment, the body of the connector member 20 has a flange 20A and defines a female coupling portion 20B. The female coupling portion 20B is adapted to engage with a corresponding male coupling portion of the connection part of the handle 12. The flange 20A abuts an axial end of the first portion 18C. In one example, the connector member 20 may be integrated with the body 18.

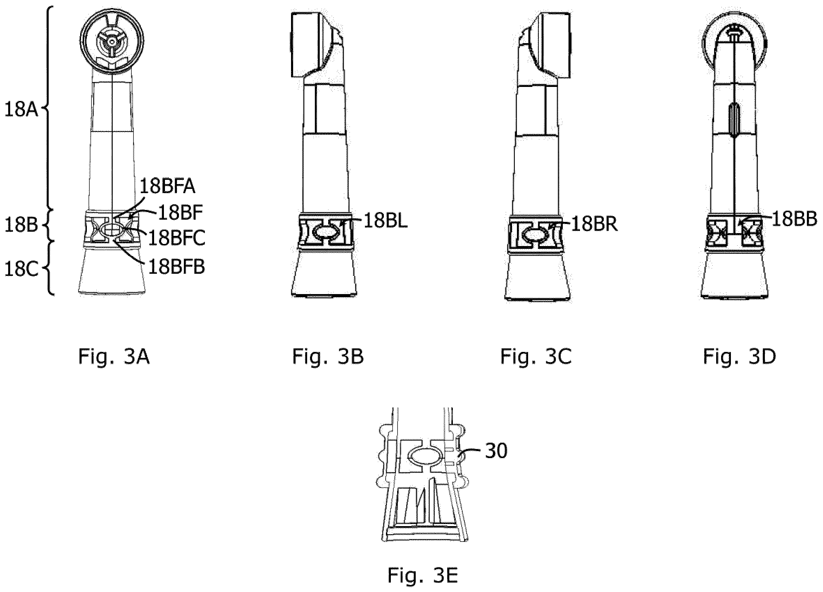

The brush head 14 of the present embodiment also includes a sleeve 30 that wraps around the flexible portion 18B. Preferably, the sleeve 30 is made of a polymer. In one embodiment, the sleeve 30 is made of a thermoplastic elastomer. As shown in Figure 3E, the sleeve 30 may be arranged to extend into the through-hole of the compressible wall portion of the flexible portion 18B. Preferably, the sleeve 30 is overmolded onto the flexible portion 18B.

Figures 3A to 3D show the structure of the body 18 of the brush head 14. As described above, the body 18 is generally formed by the first portion 18C, the second portion 18A, and the flexible portion 18B. A preferred embodiment of the compressible wall portion of the flexible portion 18B is shown in Figures 3A to 3D. In the present embodiment, the compressible wall portion includes a first rib 18BB (Figure 3D) on the back side of the brush head 14 and directly connected between the first portion 18C and the second portion 18A. The first rib 18BB may be substantially straight along the longitudinal direction of the body 18. The compressible wall portion also includes a second rib 18BF (Figure 3A) located on the front side of the brush head 14 and directly connected between the first portion 18C and the second portion 18A. Preferably, the second rib 18BF includes a curved or angled portion that is adapted to be deformed during reversible bending of the brush head 14. This portion does not extend directly parallel to the longitudinal direction of the body 18, but is angled with respect to the longitudinal direction of the body 18 to provide a non-longitudinal force component so as to provide a reliable reversible bending effect.

In accordance with the invention and as shown on Figure 3A, the second rib 18BF includes a first substantially straight portion 18BFA, a second substantially straight portion 18BFB, and a ring portion 18BFC. The first substantially straight portion 18BFA extends in the longitudinal direction of the body 18 and is connected with the first portion 18C. The second substantially straight portion 18BFB extends in the longitudinal direction of the body 18 and is connected with the second portion 18A. The ring portion 18BFC is connected between the first substantially straight portion 18BFA and the second substantially straight portion 18BFB. The ring portion 18BFC can be in open or closed loop form. Optionally, the ring portion 18BFC may be oval, circular, or polygonal. It should be understood that the second rib 18BF may have no ring portion 18BFC and have other structures capable of providing a non-longitudinal force component.

Optionally, the compressible wall portion further includes a third rib 18BL (Figure 3B) on the left side of the brush head 14 and directly connected between the first portion 18C and the second portion 18A; and a fourth rib 18BR (Figure 3C) on the right side of the brush head 14 and directly connected between the first portion 18C and the second portion 18A. In one embodiment, the structures of the third rib 18BL and the fourth rib 18BR are similar to the structure of the second rib 18BF. Preferably, the third rib 18BL and the fourth rib 18BR have the same structure to provide better balance. It should be understood that the third rib 18BL and the fourth rib 18BR may have any structures capable of providing non-longitudinal force component. In the present embodiment, through-holes are defined in respective spaces between the first rib 18BB, the second rib 18BF, the third rib 18BL, and the fourth rib 18BR, and a hollow space extending along the longitudinal direction of the body 18 is defined therebetween.

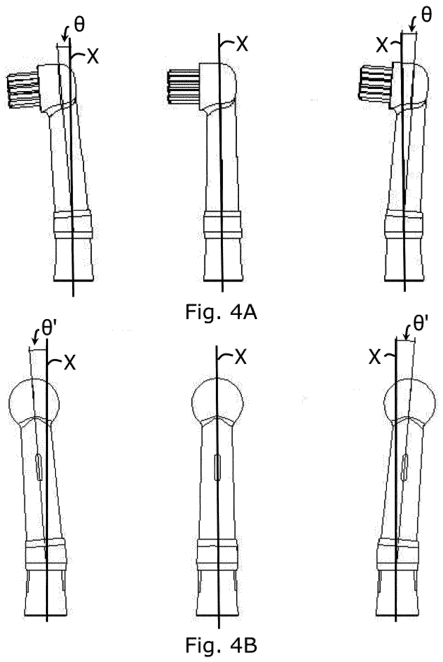

Figures 4A and 4B illustrate the bending of the brush head 14 of Figure 2A. As shown in Figure 4A, the second portion 18A can be bent by a certain angle along the front-rear direction of the body 18 with respect to the longitudinal axis X of the body 18 that is not bent. This angle can be up to 10 degrees and preferably up to about 5 degrees. In the present embodiment, the angle is at most about 4.5 degrees. Figure 4B shows that the second portion 18A can be inclined by a certain angle ' along the left-right direction of the body 18 with respect to the longitudinal axis X of the body 18 that is not bent. This angle ' can be up to 10 degrees and preferably up to about 5 degrees. In this embodiment, the angle is at most about 4.5 degrees. In a preferred embodiment, the direction of the reversible-bending can be along any direction (360 degrees) of the body 18.

The above describes a preferred embodiment of the care head for an oral care appliance of the invention, which is a brush head for an electric toothbrush. It should be understood that the care head for an oral care appliance of the invention may be the head of any toothbrush and is preferably a replaceable brush head for an oscillating electric toothbrush. Of course, in some examples, the toothbrush is not electric but is manual. Also, the care head may be not replaceable or not detachable. In some examples, the oral care appliance may not be a toothbrush, but is a gum massager or any other oral care appliance, in which the care head includes a corresponding care element (such as a massage element or other cleaning element). It should be understood that the oral care appliance of the invention that utilizes the care head may have different structures and have additional or less functional or structural features. In addition, the care head of the invention may also have different structures and have increased or decreased functional or structural features. For example, the first portion 18C and the second portion 18A of the care head body 18 may not be hollow. The orientation of the care element can be different. Those skilled in the art will recognize that many variations and/or modifications may be made to the invention as described in the specific embodiments without departing from the the scope of the appended claims.

The present embodiments should therefore be considered in all respects as illustrative not restrictive.

## Claims

1. A care head (14) for an oral care appliance (10), comprising:
a care head body (18), including
a first portion (18C) adapted for connection with a handle (12) of the oral care appliance;
a second portion (18A) adapted to carry a care element (22) on a front side of the care head body; and
a flexible portion(18B) arranged between the first portion and the second portion; and
a care element (22), arranged at the second portion;
wherein the flexible portion is integrally molded with the first portion and the second portion, and the care head body is made of a single polymeric material; and
wherein the flexible portion is formed by a compressible wall portion; the compressible wall portion defines a hollow space and has a through-hole and is compressible along the longitudinal direction of the care head body so that in use the second portion can be reversibly bent relative to the first portion,
**characterised in that**
the compressible wall portion includes:
a first rib (18BB) located at the back side of the care head and directly connected between the first portion (18C) and the second portion (18A); and
a second rib (18BF) located on the front side of the care head and is directly connected between the first portion and the second portion; and
wherein the second rib (18BF) includes:
a first substantially straight portion (18BFA) that extends in a longitudinal direction of the care head body (18) and connects with the first portion (18C);
a second substantially straight portion (18BFB) that extends in the longitudinal direction of the care head body and connects with the second portion (18A); and
a ring portion (18BFC) connected between the first substantially straight portion and the second substantially straight portion.

2. The care head (14) according to claim 1, wherein the second portion (18A) is tiltable up to 5 degrees with respect to the longitudinal axis of the care head body (18) that is not bent.

3. The care head (14) according to claim 1 or 2, wherein the direction of the reversible bending includes at least a front-rear direction of the care head.

4. The care head (14) according to any of the preceding claims, wherein the first rib (18BB) is substantially straight along a longitudinal direction of the care head body (18).

5. The care head (14) according to any of the preceding claims, wherein the second rib (18BF) includes a curved or angled portion that does not extend directly parallel to the longitudinal direction of the care head body (18) and is adapted to be deformed during the reversible bending.

6. The care head (14) according to any one of the preceding claims, wherein the compressible wall portion further comprises at least one of the following:
a third rib (18BL) at a first side of the care head, the first side being located between the front side and the back side; and
a fourth rib (18BR) at a second side of the care head, the second side being opposite the first side and located between the front side and the back side.

7. The care head (14) according to claim 6, wherein at least one of the second rib (18BF), the third rib (18BL), and the fourth rib (18BR) includes a curved or angled portion that does not extend directly parallel to the longitudinal direction of the care head body (18) and is adapted to be deformed during the reversible bending.

8. The care head (14) according to any one of the preceding claims, wherein the first portion (18C), the second portion (18A), and the flexible portion (18B) together define a chamber extending in a longitudinal direction of the care head body (18), and preferably, the second portion includes a lateral opening on the front side for mounting the care element, the lateral opening is in communication with the chamber.

9. The care head (14) according to claim 8, wherein the care element comprises a bristle tuft carrying member, the bristle tuft carrying member comprising:
a disk (22A) having a plurality of holes, and
a plurality of bristle tufts (22B) mounted in the plurality of holes and extending at least partially perpendicular to the disc.

10. The care head (14) according to claim 8 or claim 9, further comprising a shaft (28) disposed in the chamber, the shaft being arranged to be connected to the care element (22) at one end and to the connector member (20) at the other end; the connector member is adapted to be operably connected with a drive member in a handle of the oral care appliance such that in use the care element can be driven by the drive member, and, optionally, the shaft is reversibly bendable such that in use the bending of the care head body can cause bending of the shaft.

11. The care head (14) according to any one of claims 1 to 10, further comprising a polymeric sleeve surrounding the flexible portion (18B).

12. The care head (14) according to claim 11, wherein the polymeric sleeve is arranged to extend into the through-hole of the compressible wall portion.

13. An oral care appliance (10) comprising a handle (12) and a care head (14) according to any one of claims 1 to 12 and connected or connectable to the handle, and, optionally, wherein the oral care appliance is an electric toothbrush.

## Patentansprüche

1. Pflegekopf (14) für eine Mundpflegevorrichtung (10), umfassend:
einen Pflegekopfkörper (18), einschließlich
eines ersten Abschnitts (18C), der für eine Verbindung mit einem Griff (12) der Mundpflegevorrichtung angepasst ist;
eines zweiten Abschnitts (18A), der angepasst ist, um ein Pflegeelement (22) auf einer Vorderseite des Pflegekopfkörpers zu tragen; und
eines flexiblen Abschnitts (18B), der zwischen dem ersten Abschnitt und dem zweiten Abschnitt angeordnet ist; und
eines Pflegeelements (22), das an dem zweiten Abschnitt angeordnet ist;
wobei der flexible Abschnitt mit dem ersten Abschnitt und dem zweiten Abschnitt einstückig geformt ist und der Pflegekopfkörper aus einem einzelnen Polymermaterial hergestellt ist;
und
wobei der flexible Abschnitt mittels eines komprimierbaren Wandabschnitts ausgebildet ist, der komprimierbare Wandabschnitt einen Hohlraum definiert und ein Durchgangsloch aufweist und entlang der Längsrichtung des Pflegekopfkörpers komprimierbar ist, so dass der zweite Abschnitt in Verwendung relativ zu dem ersten Abschnitt reversibel gebogen werden kann,
**dadurch gekennzeichnet, dass** der komprimierbare Wandabschnitt einschließt:
eine erste Rippe (18BB), die sich an der Rückseite des Pflegekopfes befindet und zwischen dem ersten Abschnitt (18C) und dem zweiten Abschnitt (18A) direkt verbunden ist; und
eine zweite Rippe (18BF), die sich auf der Vorderseite des Pflegekopfes befindet und zwischen dem ersten Abschnitt und dem zweiten Abschnitt direkt verbunden ist; und
wobei die zweite Rippe (18BF) einschließt:
einen ersten im Wesentlichen geraden Abschnitt (18BFA), der sich in einer Längsrichtung des Pflegekopfkörpers (18) erstreckt und mit dem ersten Abschnitt (18C) verbunden ist;
einen zweiten im Wesentlichen geraden Abschnitt (18BFB), der sich in der Längsrichtung des Pflegekopfkörpers erstreckt und mit dem zweiten Abschnitt (18A) verbunden ist; und
einen Ringabschnitt (18BFC), der zwischen dem ersten im Wesentlichen geraden Abschnitt und dem zweiten im Wesentlichen geraden Abschnitt verbunden ist.

2. Pflegekopf (14) nach Anspruch 1, wobei der zweite Abschnitt (18A) hinsichtlich der Längsachse des Pflegekopfkörpers (18), der nicht gebogen ist, bis zu 5 Grad kippbar ist.

3. Pflegekopf (14) nach Anspruch 1 oder 2, wobei die Richtung des reversiblen Biegens mindestens eine Vorwärts-Rückwärts-Richtung des Pflegekopfes einschließt.

4. Pflegekopf (14) nach einem der vorstehenden Ansprüche, wobei die erste Rippe (18BB) entlang einer Längsrichtung des Pflegekopfkörpers (18) im Wesentlichen gerade ist.

5. Pflegekopf (14) nach einem der vorstehenden Ansprüche, wobei die zweite Rippe (18BF) einen gekrümmten oder abgewinkelten Abschnitt einschließt, der sich nicht direkt parallel zu der Längsrichtung des Pflegekopfkörpers (18) erstreckt und angepasst ist, um während dem reversiblen Biegen verformt zu werden.

6. Pflegekopf (14) nach einem der vorstehenden Ansprüche, wobei der komprimierbare Wandabschnitt ferner mindestens eines der folgenden umfasst:
eine dritte Rippe (18BL) an einer ersten Seite des Pflegekopfes, wobei sich die erste Seite zwischen der Vorderseite und der Rückseite befindet; und
eine vierte Rippe (18BR) an einer zweiten Seite des Pflegekopfes, wobei die zweite Seite der ersten Seite gegenüberliegt und sich zwischen der Vorderseite und der Rückseite befindet.

7. Pflegekopf (14) nach Anspruch 6, wobei mindestens eine der zweiten Rippe (18BF), der dritten Rippe (18BL) und der vierten Rippe (18BR) einen gekrümmten oder abgewinkelten Abschnitt einschließt, der sich nicht direkt parallel zu der Längsrichtung des Pflegekopfkörpers (18) erstreckt und angepasst ist, um während dem reversiblen Biegen verformt zu werden.

8. Pflegekopf (14) nach einem der vorstehenden Ansprüche, wobei der erste Abschnitt (18C), der zweite Abschnitt (18A) und der flexible Abschnitt (18B) zusammen eine Kammer definieren, die sich in einer Längsrichtung des Pflegekopfkörpers (18) erstreckt, und wobei vorzugsweise der zweite Abschnitt eine seitliche Öffnung auf der Vorderseite zum Montieren des Pflegeelements einschließt, wobei die seitliche Öffnung mit der Kammer in Verbindung steht.

9. Pflegekopf (14) nach Anspruch 8, wobei das Pflegeelement ein Borstenbüschelträgerelement umfasst, das Borstenbüschelträgerelement umfassend:
eine Scheibe (22A), die eine Vielzahl von Löchern aufweist, und
eine Vielzahl von Borstenbüscheln (22B), die in der Vielzahl von Löchern montiert sind und sich mindestens teilweise senkrecht zu der Scheibe erstrecken.

10. Pflegekopf (14) nach Anspruch 8 oder 9, ferner umfassend eine Welle (28), die in der Kammer angeordnet ist, wobei die Welle angeordnet ist, um mit dem Pflegeelement (22) an einem Ende und mit dem Verbinderelement (20) an dem anderen Ende verbunden ist, wobei das Verbinderelement angepasst ist, um mit einem Antriebselement in einem Griff der Mundpflegevorrichtung derart wirkverbunden zu sein, dass in Verwendung das Pflegeelement mittels des Antriebselements angetrieben werden kann, und optional, die Welle derart reversibel biegbar ist, dass in Verwendung das Biegen des Pflegekopfkörpers ein Biegen der Welle verursachen kann.

11. Pflegekopf (14) nach einem der Ansprüche 1 bis 10, ferner umfassend eine Polymerhülse, die den flexiblen Abschnitt (18B) umgibt.

12. Pflegekopf (14) nach Anspruch 11, wobei die Polymerhülse angeordnet ist, um sich in das Durchgangsloch des komprimierbaren Wandabschnitts zu erstrecken.

13. Mundpflegevorrichtung (10), umfassend einen Griff (12) und einen Pflegekopf (14) nach einem der Ansprüche 1 bis 12 und verbunden oder verbindbar mit dem Griff ist, und optional wobei die Mundpflegevorrichtung eine elektrische Zahnbürste ist.

## Revendications

1. Tête de soin (14) pour un appareil de soin buccal (10), comprenant :
un corps de tête de soin (18), incluant
une première partie (18C) adaptée pour un raccordement à une poignée (12) de l'appareil de soin buccal ;
une deuxième partie (18A) adaptée pour porter un élément de soin (22) sur un côté avant du corps de tête de soin ; et
une partie flexible (18B) agencée entre la première partie et la deuxième partie ; et
un élément de soin (22), agencé au niveau de la deuxième partie ;
dans laquelle la partie flexible est moulée d'un seul tenant avec la première partie et la deuxième partie, et le corps de tête de soin est constitué d'un seul matériau polymère ;
et
dans laquelle la partie flexible est formée par une partie de paroi compressible ; la partie de paroi compressible définit un espace creux et a un trou traversant et est compressible le long de la direction longitudinale du corps de tête de soin de sorte qu'en utilisation la deuxième partie puisse être courbée de manière réversible par rapport à la première partie,
**caractérisée en ce que** la partie de paroi compressible inclut :
une première nervure (18BB) située au niveau du côté arrière de la tête de soin et directement raccordée entre la première partie (18C) et la deuxième partie (18A) ; et
une deuxième nervure (18BF) située sur le côté avant de la tête de soin et est directement raccordée entre la première partie et la deuxième partie ; et
dans laquelle la deuxième nervure (18BF) inclut :
une première partie sensiblement droite (18BFA) qui s'étend dans une direction longitudinale du corps de tête de soin (18) et se raccorde à la première partie (18C) ;
une deuxième partie sensiblement droite (18BFB) qui s'étend dans la direction longitudinale du corps de tête de soin et se raccorde à la deuxième partie (18A) ; et
une partie annulaire (18BFC) raccordée entre la première partie sensiblement droite et la deuxième partie sensiblement droite.

2. Tête de soin (14) selon la revendication 1, dans laquelle la deuxième partie (18A) est inclinable jusqu'à 5 degrés par rapport à l'axe longitudinal du corps de tête de soin (18) qui n'est pas courbé.

3. Tête de soin (14) selon la revendication 1 ou 2, dans laquelle la direction de la courbure réversible inclut au moins une direction avant-arrière de la tête de soin.

4. Tête de soin (14) selon l'une quelconque des revendications précédentes, dans laquelle la première nervure (18BB) est sensiblement droite le long d'une direction longitudinale du corps de tête de soin (18).

5. Tête de soin (14) selon l'une quelconque des revendications précédentes, dans laquelle la deuxième nervure (18BF) inclut une partie incurvée ou coudée qui ne s'étend pas directement parallèlement à la direction longitudinale du corps de tête de soin (18) et est adaptée pour être déformée lors de la courbure réversible.

6. Tête de soin (14) selon l'une quelconque des revendications précédentes, dans laquelle la partie de paroi compressible comprend en outre au moins l'une de ce qui suit :
une troisième nervure (18BL) au niveau d'un premier côté de la tête de soin, le premier côté étant situé entre le côté avant et le côté arrière ; et
une quatrième nervure (18BR) au niveau d'un deuxième côté de la tête de soin, le deuxième côté étant opposé au premier côté et situé entre le côté avant et le côté arrière.

7. Tête de soin (14) selon la revendication 6, dans laquelle au moins l'une de la deuxième nervure (18BF), de la troisième nervure (18BL) et de la quatrième nervure (18BR) inclut une partie incurvée ou coudée qui ne s'étend pas directement parallèlement à la direction longitudinale du corps de tête de soin (18) et est adaptée pour être déformée lors de la courbure réversible.

8. Tête de soin (14) selon l'une quelconque des revendications précédentes, dans laquelle la première partie (18C), la deuxième partie (18A) et la partie flexible (18B) définissent ensemble une chambre s'étendant dans une direction longitudinale du corps de tête de soin (18), et de préférence, la deuxième partie inclut une ouverture latérale sur le côté avant de montage de l'élément de soin, l'ouverture latérale est en communication avec la chambre.

9. Tête de soin (14) selon la revendication 8, dans laquelle l'élément de soin comprend un organe porteur de touffe de poils, l'organe porteur de touffe de poils comprenant :
un disque (22A) ayant une pluralité de trous, et
une pluralité de touffes de poils (22B) montées dans la pluralité de trous et s'étendant au moins partiellement perpendiculairement au disque.

10. Tête de soin (14) selon la revendication 8 ou 9, comprenant en outre une tige (28) disposée dans la chambre, la tige étant agencée pour être raccordée à l'élément de soin (22) au niveau d'une extrémité et à l'organe de raccordement (20) au niveau de l'autre extrémité ; l'organe de raccordement est adapté pour être raccordé de manière fonctionnelle à un organe d'entraînement dans une poignée de l'appareil de soin buccal de sorte qu'en utilisation l'élément de soin puisse être entraîné par l'organe d'entraînement, et, éventuellement, la tige peut être courbée de manière réversible de sorte qu'en utilisation la courbure du corps de tête de soin puisse entraîner une courbure de la tige.

11. Tête de soin (14) selon l'une quelconque des revendications 1 à 10, comprenant en outre un manchon polymère entourant la partie flexible (18B).

12. Tête de soin (14) selon la revendication 11, dans laquelle le manchon polymère est agencé pour s'étendre dans le trou traversant de la partie de paroi compressible.

13. Appareil de soin buccal (10) comprenant une poignée (12) et une tête de soin (14) selon l'une quelconque des revendications 1 à 12 et raccordé ou peut être raccordé à la poignée, et, éventuellement, dans lequel l'appareil de soin buccal est une brosse à dents électrique.
